Europäisches Patentamt

European Patent Office

Office européen des brevets

(11) Veröffentlichungsnummer: **0 300 237 B1**

## (12) EUROPÄISCHE PATENTSCHRIFT

(45) Veröffentlichungstag der Patentschrift: **09.08.95**

(21) Anmeldenummer: **88110289.1**

(22) Anmeldetag: **28.06.88**

Die Akte enthält technische Angaben, die nach
dem Eingang der Anmeldung eingereicht wurden
und die nicht in dieser Patentschrift enthalten sind.

(51) Int. Cl.⁶: **B29B 15/10**, B29C 70/00,
B32B 5/02, C08L 23/10

### (54) Verbundwerkstoff aus mit Fasermatten verstärktem Polypropylen.

(30) Priorität: **21.07.87 DE 3724155**

(43) Veröffentlichungstag der Anmeldung:
**25.01.89 Patentblatt 89/04**

(45) Bekanntmachung des Hinweises auf die
Patenterteilung:
**09.08.95 Patentblatt 95/32**

(84) Benannte Vertragsstaaten:
**AT BE CH DE ES FR GB GR IT LI LU NL SE**

(56) Entgegenhaltungen:
**EP-A- 0 211 249**
**EP-A- 0 211 479**
**DE-A- 1 914 370**

**Encycl. Pol. Sc. Techn. 7, 298, 299 (1985)**

(73) Patentinhaber: **PCD-Polymere Gesellschaft
m.b.H.**
**Danubiastrasse 21-25**
**A-2323 Schwechat-Mannswörth (AT)**

(72) Erfinder: **Horacek, Heinrich, Dr.**
**Bockgasse 43**
**A-4020 Linz (AT)**
Erfinder: **Kügler, Franz, Dr.**
**Am Feldrain 22**
**A-4052 Ansfelden (AT)**

(74) Vertreter: **Kunz, Ekkehard, Dr.**
**Chemie Linz GmbH**
**Abteilung Patente**
**St. Peter-Str. 25**
**A-4021 Linz (AT)**

EP 0 300 237 B1

**Beschreibung**

Die Erfindung betrifft einen Verbundwerkstoff aus mit Fasermatten verstärktem Polypropylen mit bimodaler Molekulargewichtsverteilung, wobei das Polypropylen aus einer niedermolekularen und einer höhermolekularen Polypropylen-Fraktion besteht.

Die Herstellung von Platten aus glasfasermattenverstärktem Polypropylen wird beispielsweise in der DE-PS 2 948 235 beschrieben, wobei die Glasfasermatten in einer erwärmten Laminierzone mit geschmolzenem Polypropylen unter Druck imprägniert und die gebildete Verbundplatte zur Verfestigung des Polypropylens sodann in einer Kühlzone unter Druck abgekühlt wird. Zur Verbesserung der Plattenstruktur und der Plattenoberfläche können an den Außenseiten gleichzeitig Thermoplastfilme mitverpreßt werden.

Derartige fasermattenverstärkte Platten werden beispielsweise zur Herstellung von Konstruktionsteilen im Maschinen- und Apparatebau oder in der Autoindustrie verwendet, wobei sie in einem anschließenden Heißpreßvorgang in beheizten Formpressen unter Druck zu den entsprechenden Formteilen verpreßt werden.

Um Verbundwerkstoffe mit guten mechanischen Eigenschaften zu erhalten, ist eine gute Tränkung und Benetzung der Fasermatten mit dem geschmolzenen Polypropylen bei der Plattenherstellung wesentlich. Setzt man handelsübliche Polypropylene ein, so sind Verstärkungsfasern und Polypropylen über die Dicke der gefertigten Verbundplatte nicht homogen verteilt, sondern es entsteht wegen des nur ungenügenden Eindringens des Polypropylens in das Innere der Fasermatten ein Schichtaufbau. Bei Einsatz von zwei Fasermatten, zwischen die beispielsweise geschmolzenes Polypropylen extrudiert wird, entsteht ein Schichtaufbau mit hohem Polypropylengehalt in der Mittelzone und mit nur wenig Polypropylen in den Randzonen. Aufgrund der ungleichmäßigen Imprägnierung und der inhomogenen Faserverteilung zeigen derartige Verbundplatten auch schlechte und ungleichmäßige mechanische Eigenschaften, sowie eine schlechte Oberflächenbeschaffenheit, d. h. vor allem, daß Glas an der Oberfläche in Erscheinung tritt.

Eine bessere Imprägnierung der Fasermatten kann beispielsweise durch die Verwendung eines leicht fließenden Polypropylens erreicht werden. Dabei ergibt sich jedoch der Nachteil, daß beim anschließenden Heißpressen der Platten das Polypropylen infolge der Entmischung zwischen dem leicht fließenden Polypropylen und den schwer fließenden Fasern, bevorzugt in die Ränder und in die schwer zugänglichen Teile des Preßteils, wie beispielsweise in Hinterschneidungen und Rippen, fließt, während die Verstärkungsfasern nicht oder nur in geringerem Maße in diese entfernteren Teile gelangen. Dadurch erfolgt dort keine oder nur eine geringe Verstärkung, wodurch an diesen Stellen auch entsprechend schlechtere mechanische Eigenschaften vorliegen.

Eine gewisse Verbesserung dieser Nachteile wird in der EP-A-211 249 dadurch erreicht, daß Glasfasermatten mit einem niedermolekularen Polypropylen mit enger, genau definierter Molekulargewichtsverteilung imprägniert werden. Allerdings zeigen die mit diesem Polypropylen hergestellten Verbundplatten eine für eine einwandfreie Qualität nicht ausreichende Gleichmäßigkeit der Glasverteilung, wodurch weder optimale Werte für die mechanischen Eigenschaften, noch eine ausreichend gute Oberflächenqualität erreicht werden.

Aufgabe der vorliegenden Erfindung war es demnach, einen Verbundwerkstoff aus fasermattenverstärktem Polypropylen mit guten mechanischen und optischen Eigenschaften zu finden, der sich sowohl durch eine einwandfreie Imprägnierung bei der Plattenherstellung, als auch durch eine einwandfreie Verarbeitbarkeit ohne Entmischung der Verstärkungsfasern beim anschließenden Heißpressen , insbesondere beim Verpressen zu komplizierteren Fertigteilen, auszeichnet.

Überraschenderweise wurde gefunden, daß derartige verbesserte Verbundwerkstoffe dadurch hergestellt werden können, daß die Fasermatten mit einem Polypropylen mit bimodaler Molekulargewichtsverteilung imprägniert werden, wobei das Polypropylen aus einer niedermolekularen und einer höhermolekularen Polypropylenfraktion besteht.

Gegenstand der vorliegenden Erfindung ist demnach ein Verbundwerkstoff, im wesentlichen aus Polypropylen und einer Verstärkung aus einer oder mehreren Fasermatten bestehend, dadurch gekennzeichnet, daß das Polypropylen eine bimodale Molekulargewichtsverteilung besitzt, wobei die Gewichtsmittelwerte der Molekulargewichte der höhermolekularen Fraktion bei 150.000 - 900.000 g/mol und jene der niedermolekularen Fraktion bei 50.000 - 150.000 g/mol liegen, und die Differenz zwischen den Gewichtsmittelwerten der Molekulargewichte der einzelnenen Fraktionen mindestens 50.000 g/mol beträgt.

Eine bimodale Molekulargewichtsverteilung kann beispielsweise mittels Gelpermeationschromatographie festgestellt werden, wobei in den Molekulargewichtskurven 2 Peaks auftreten (Encyclopedia of Polymer Science and Engineering 2nd ed. Vol.3, J. Wiley New York (1985), S 501 - 502). Außerdem liegt das mittlere Molekulargewicht eines bimodalen Polypropylens höher als jenes eines unimodalen mit dem selben Meltflow-Index (MFI).

Bevorzugt werden Polypropylene mit einem Gewichtsmittelwert der Molekulargewichte von 180.000 bis 500.000 g/mol für die höhermolekulare Fraktion und von 80.000 bis 120.000 g/mol für die niedermolekulare Fraktion eingesetzt. Die Molekulargewichtskurven wurden durch Gelpermeationschromatographie nach ASTM-D 3593-80 bestimmt.

Die bimodale Molekulargewichtsverteilung kann entweder bereits während der Polymerisation des Propylens durch entsprechende Führung der einzelnen Polymerisationsstufen erreicht werden, wobei in den verschiedenen Polymerisationsstufen unter Zugabe eines Reglers jeweils bis zum gewünschten Polymerisationsgrad polymerisiert wird. Eine weitere Möglichkeit besteht darin, Polypropylene mit unterschiedlichem Molekulargewicht miteinander zu mischen. Die niedermolekulare Fraktion wird dabei vorzugsweise durch oxidativen Abbau eines höhermolekularen Polypropylens bis zum gewünschten Molekulargewicht, beispielsweise mit Hilfe eines organischen Peroxids, wie z. B. in H.P.Frank, Polypropylene, Gordon and Breach 1968, Seite 92, 93 beschrieben, hergestellt.

Gleichfalls möglich ist die direkte Polymerisation bis zum gewünschten niedermolekularen Polypropylen, wobei die Polymerisation unter Zugabe eines Reglers nur bis zum angestrebten Molekulargewicht geführt wird. Als Polypropylene eignen sich insbesondere teilkristalline Polypropylene mit einem Kristallinitätsgrad von mindestens 35 % und einem Isotaktizitäts-Index von über 90 % (ISO 1873). Es können sowohl Homopolymerisate als auch Copolymerisate, beispielsweise Propylen-Ethylen-Copolymerisate mit einem Ethylengehalt bis zu etwa 30 Mol % eingesetzt werden.

Der Anteil der niedermolekularen Fraktion liegt bevorzugt bei 10 - 60 Gew.%, besonders bevorzugt bei 15 - 50 Gew.%, bezogen auf die Gesamtmenge an Polypropylen. Der Meltflow-Index (MFI) des zur Imprägnierung der Fasermatten verwendeten Polypropylengemisches, gemessen nach ISO R 1133, Procedure 12 bei 230°C und einer Belastung von 2,16 kg liegt bevorzugt bei 75 - 600g/10 min, besonders bevorzugt bei 100 - 300 g/10 min. Der gewünschte MFI kann dabei durch einfaches Mischen der beiden Polypropylenfraktionen entsprechend den geforderten Eigenschaften des Verbundwerkstoffes bzw. im Hinblick auf optimale Verarbeitungsbedingungen eingestellt werden.

Entsprechend den Ansprüchen an die mechanischen Eigenschaften der Platten können veschiedene Fasermatten, wie z. B. solche aus Glasfasern, Kohlefasern oder Aramidfasern, bzw. Fasermischungen oder Matten aus verschiedenen Fasern eingesetzt werden. Bevorzugt werden Glasfasermatten verwendet. Der Anteil an Glasfasern im fertigen Verbundwerkstoff liegt dabei üblicherweise bei etwa 10 - 50 Gew.%.

Kohlefasern oder Aramidfasern kommen vor allem dort zum Einsatz, wo insbesondere an die Festigkeit bzw. Steifigkeit der Platten bei geringem spezifischem Gewicht besondere Anforderungen gestellt werden. Die Fasermatten können sowohl aus Schnittfasern mit bevorzugten Längen von 10 -250 mm oder aus zu einem Vlies abgelegten Endlosfäden bestehen, wobei die Fasern und Fäden sowohl in Wirrlage als auch gerichtet vorliegen können. Die Verfestigung der Fasermatten erfolgt vorzugsweise mechanisch, beispielsweise durch Vernadeln, Vernähen oder Versteppen. Das Flächengewicht der Fasermatten liegt bevorzugt bei 250 - 1.200 g/m².

Die Herstellung der erfindungsgemäßen Verbundwerkstoffe erfolgt beispielsweise durch Aufschmelzen der Polypropylenmischung gemeinsam mit den üblichen Additivs, wie z. B. Stabilisatoren, Pigmenten, Füllstoffen, Flammschutzmitteln, etc. in einem Extruder, Extrusion durch eine Breitschlitzdüse, Zusammenbringen in noch flüssigem Zustand mit einer oder mehreren Fasermatten, sowie anschließendes Verpressen und Abkühlen, vorzugsweise kontinuierlich zwischen den Bändern einer Doppelbandpresse. Die erhaltenen Verbundplatten besitzen eine Dicke von üblicherweise 1 - 10 mm und lassen sich zu qualitativ hochwertigen Formteilen mit gleichmäßiger Faserverteilung und besondere guter Oberflächenqualität verpressen.

An den gemäß folgenden Beispielen hergestellten Verbundplatten wurde die Biegefestigkeit gemäß DIN 53452 und der Biege-Elastizitätsmodul gemäß DIN 53457 gemessen.
Die Gleichmäßigkeit der Verteilung der Verstärkungsfasern (G), die Fließfähigkeit (F) und die Oberflächenqualität wurden an 100 x 100 mm großen Verbundplatten bestimmt, die in einem Infrarotofen auf 220°C erhitzt und auf einer Presse bei 70°C Plattentemperatur und 98 bar spezifischem Druck verpreßt wurden.

Die Fließfähigkeit wurde als %Flächenzuwachs beim Pressen ausgedrückt und entspricht bei den verwendeten 100cm² Probeplatten dem Flächenzuwachs in cm².

$$F = \frac{(\text{Fläche nach dem Pressen} - 100)}{100 \text{ cm}^2} \times 100 \: (\%)$$

Eine hohe Fließfähigkeit ist vor allem deshalb von Vorteil, weil in diesem Fall, auch beim Pressen großer Flächen, mit geringeren Preßkräften das Auslangen gefunden wird.

Die Bestimmung der Gleichmäßigkeit der Faserverteilung erfolgte bei glasfaserverstärkten Platten durch getrenntes Veraschen des der Plattenfläche von 100 cm$^2$ vor dem Pressen entsprechenden verpreßten Teiles (innere Fläche) und des dem Flächenzuwachs entsprechenden Teiles der verpreßten Probe (äußere Fläche) im Muffelofen bei 600°C. Ein Vergleich des Glasgehaltes Gi (Glasgewicht pro Flächeneinheit) der inneren Fläche mit dem Glasgehaltes Ga der äußeren Fläche gemäß der Formel

$$G = \left( \frac{G_i}{G_a} - 1 \right) \times 100$$

ist ein Maß für die Gleichmäßigkeit der Glasverteilung, wobei im Idealfall G = 0 wäre. Je kleiner G ist, desto geringer ist die Entmischung von Fasern und Polypropylen im verpreßten Teil und desto besser fließen die Fasern auch in entfernter liegende und schwer zugängliche Teile, wie z. B. in Hinterschneidungen und Rippen. Bei kohlefaser- oder aramidfaserverstärkten Platten wurden die Fasern durch getrenntes Auflösen der Matrix der inneren und äußeren Fläche erhalten.

Die Bestimmung der Oberflächenqualität wurde durch optische Beurteilung der Oberflächenglätte und -gleichmäßigkeit der verpreßten Platten vorgenommen.

Beispiel 1:

Ein Granulatgemisch aus 80 Teilen eines Polypropylens mit einem mittleren Molekulargewicht von 210.000 g/mol und einem MFI von 50 g/10 min (PP-A, entsprechend Daplen[(R)] US 10 von Petrochemie Danubia), 20 Teilen eines aus Propathene[(R)] GL 608 E von ICI bei 200 - 220°C in einem Zweischneckenextruder mittels Perkadox[(R)] 14 - 90 (Akzo) bis zu einem mittleren Molekulargewicht von 106.000 g/mol und einem MFI von 1.500 g/10 min abgebauten Polypropylens (PP-B), 3 Teilen Langzeitstabilisator-, 1 Teil Verarbeitungsstabilisator- und 1,25 Teilen Ruß-Batch wurden in einem Extruder bei 200 - 220°C aufgeschmolzen, homogenisiert und über eine Breitschlitzdüse als Schmelzefilm extrudiert, der zwischen 2 Glasfasermatten (Flächengewicht je 650 g/m$^2$, bestehend aus vernadelten Schnittfasern von 50 mm Länge) kontinuierlich einer Doppelbandpresse zugeführt wurde. Hier wurden die Matten unter Druck- und Temperatureinwirkung mit dem Polypropylengemisch, das einen MFI von 200 g/10 min aufwies, imprägniert und die erhaltene Verbundplatte in einer anschließenden Kühlzone unter Druck verfestigt. Es wurde eine 3,7 mm dicke Verbundplatte mit einem Glasgehalt von 30 Gew.% erhalten.

Der Biege-E-Modul der Platte lag bei 5.000 N/mm$^2$, die Biegefestigkeit bei 115 N/mm$^2$, F = 170 %, G = 15 %.

Beispiel 2 - 4:

Analog zu Beispiel 1 wurden Verbundplatten hergestellt, wobei jedoch, wie in Tabelle 1 angeführt, unterschiedliche Mengenanteile an höhermolekularem (PP-A) und niedermolekularem Polypropylen (PP-B) eingesetzt wurden. Die Werte für MFI, E-Modul, Biegefestigkeit, F, G und Oberflächenqualität sind ebenfalls in Tabelle 1 zusammengefaßt.

Beispiel 5:

Analog zu Beispiel 1 wurden Verbundplatten hergestellt, wobei jedoch ein Polypropylengemisch aus 65 Teilen eines Polypropylens mit einem mittleren Molekulargewicht von 900.000 g/mol und einem MFI von 0,3 g/10 min (PP-A1) und 35 Teilen PP-B verwendet wurden. Die Eigenschaftswerte für die erhaltenen Verbundplatten und die daraus verpreßten Platten sind in Tabelle 1 zusammengefaßt.

Vergleichsbeispiele V6 und V7:

Analog zu Beispiel 1 wurden Verbundplatten hergestellt, wobei jedoch an Stelle des bimodalen Polypropylen-Granulatgemisches in V6 100 Teile eines nur aus PP-B und in V7 100 Teile eines nur aus PP-A bestehenden Polypropylens verwendet wurden. Die Eigenschaftswerte für die erhaltenen Verbundplatten und für die daraus verpreßten Platten sind in Tabelle 1 zusammengefaßt.

Vergleichsbeispiel V8:

Analog zu Beispiel 1 wurden Verbundplatten hergestellt, wobei jedoch an Stelle des Polypropylen-Granulatgemisches 100 Teile eines PP-B1 eingesetzt wurden, das durch oxydativen Abbau von Propathene[R] GS 608 E (ICI) mittels Perkadox[R] 14 - 90 im Zweischneckenextruder bei 200 - 220°C bis zu einem MFI von 200 g/10 min erhalten wurde. Die Eigenschaftswerte der gefertigten Platten sind in Tabelle 1 zusammengefaßt.

Beispiel 9:

Analog zu Beispiel 1 wurden Verbundplatten hergestellt, wobei jedoch an Stelle von 2 Glasfasermatten 2 x 12 Kohlefasermatten mit einem Flächengewicht von je 55 $g/m^2$ und einer mittleren Faserlänge von 15 mm eingesetzt wurden. Die Eigenschaftswerte der gefertigten Platten sind in Tabelle 1 zusammengefaßt.

Vergleichsbeispiel V 10:

Analog zu Beispiel 1 wurden Verbundplatten hergestellt, wobei jedoch
a) an Stelle von 2 Glasfasermatten 2 x 12 Kohlefasermatten wie in Beispiel 9 und
b) an Stelle des bimodalen Polypropylen-Granulatgemisches 100 Teile eines nur aus PP-A bestehenden Polypropylens verwendet wurden.
Die Eigenschaftswerte der gefertigten Platten sind in Tabelle 1 zusammengefaßt.

Beispiel 11:

Analog zu Beispiel 1 wurden Verbundplatten hergestellt, wobei jedoch an Stelle von 2 Glasfasermatten 2 x 4 Aramidfasermatten mit einem Flächengewicht von je 165 $g/m^2$ und einer mittleren Faserlänge von 60 mm eingesetzt wurden. Die Eigenschaftswerte der gefertigten Platten sind in Tabelle 1 zusammengefaßt.

Vergleichsbeispiel V12:

Analog zu Beispiel 1 wurden Verbundplatten hergestellt, wobei jedoch
a) an Stelle von 2 Glasfasermatten 2 x 4 Aramidfasermatten wie in Beispiel 11 und
b) an Stelle des bimodalen Polypropylen-Granulatgemisches 100 Teile eines nur aus PP-A bestehenden Polypropylens verwendet wurden.
Die Eigenschaftswerte der gefertigten Platten sind in Tabelle 1 zusammengefaßt.

Tabelle 1

| | PP(Teile) | | | | MFI g/10 min | Biege-E-Modul $N/mm^2$ | Biegefestigkeit $N/mm^2$ | F % | G % | Oberflächenqualität |
|---|---|---|---|---|---|---|---|---|---|---|
| | A | A1 | B | B1 | | | | | | |
| 1 | 80 | - | 20 | - | 200 | 5000 | 115 | 170 | 15 | sehr gut |
| 2 | 60 | - | 40 | - | 450 | 5000 | 120 | 180 | 15 | sehr gut |
| 3 | 40 | - | 60 | - | 775 | 4800 | 100 | 200 | 20 | sehr gut |
| 4 | 20 | - | 80 | - | 1135 | 4750 | 80 | 220 | 20 | sehr gut |
| 5 | - | 65 | 35 | - | 200 | 4750 | 130 | 180 | 10 | sehr gut |
| V6 | - | - | 100 | - | 1500 | 4600 | 100 | 240 | 15 | sehr gut |
| V7 | 100 | - | - | - | 50 | 7800 | 116 | 100 | 200 | gering |
| V8 | - | - | - | 100 | 200 | 4500 | 85 | 170 | 25 | gut |
| 9 | 80 | - | 20 | - | 200 | 7000 | 150 | 200 | 10 | sehr gut |
| V10 | 100 | - | - | - | 50 | 9500 | 145 | 120 | 110 | gering |
| 11 | 80 | - | 20 | - | 200 | 4000 | 90 | 150 | 15 | sehr gut |
| V12 | 100 | - | - | - | 50 | 5000 | 100 | 100 | 120 | gering |

Aus den in Tabelle 1 zusammengefaßten Eigenschaftswerten geht deutlich hervor, daß bei Verwendung des erfindungsgemäßen Polypropylens mit bimodaler Molekulargewichtsverteilung sowohl bessere mechanische Eigenschaften und Fließeigenschaften des gefertigten Verbundwerkstoffes, als auch eine gleichmäßigere Faserverteilung, sowie eine bessere Oberflächenqualität der daraus verpreßten Platten erhalten werden konnten, als dies bei Verwendung von einheitlichen Polypropylenen mit unimodaler Molekulargewichtsverteilung möglich ist. Der sehr hohe E-Modul in den Vergleichsbeispielen V7, V10 und V12 ist auf den durch ungleichmäßige Imprägnierung bedingten Schichtaufbau im Halbzeug zurückzuführen. Nach dem Heißpressen wird im fertigen Formteil, bei dem kein Schichtaufbau mehr auftritt, nur mehr ein wesentlich geringerer E-Modul gemessen (z. B. 4.200 N/mm$^2$ in V7).

**Patentansprüche**

**Patentansprüche für folgende Vertragsstaaten : AT, BE, CH, LI, DE, FR, GB, GR, IT, LU, NL, SE**

1.  Verbundwerkstoff, im wesentlichen aus Polypropylen und einer Verstärkung aus einer oder mehreren Fasermatten bestehend, dadurch gekennzeichnet, daß das Polypropylen eine bimodale Molekulargewichtsverteilung besitzt, wobei die Gewichtsmittelwerte der Molekulargewichte der höhermolekularen Fraktion bei 150.000 bis 900.000 g/mol und jene der niedermolekularen Fraktion bei 50.000 bis 150.000 g/mol liegen, und die Differenz zwischen den Gewichtsmittelwerten der Molekulargewichte der einzelnen Fraktionen mindestens 50.000 g/mol beträgt.

2.  Verbundwerkstoff gemäß Anspruch 1, dadurch gekennzeichnet, daß die Gewichtsmittelwerte der Molekulargewichte der höhermolekularen Fraktion bei 180.000 bis 500.000 g/mol und jene der niedermolekularen Fraktion bei 80.000 bis 120.000 g/mol liegen.

3.  Verbundwerkstoff gemäß Anspruch 1 oder 2, dadurch gekennzeichnet, daß die niedermolekulare Fraktion in Mengen von 10 bis 60 Gew.% bezogen auf Polypropylen, vorliegt.

4.  Verbundwerkstoff gemäß Anspruch 3, dadurch gekennzeichnet, daß die niedermolekulare Fraktion in Mengen von 15 bis 50 Gew.%, bezogen auf Polypropylen, vorliegt.

5.  Verbundwerkstoff gemäß einem der Ansprüche 1 bis 4, dadurch gekennzeichnet, daß das Polypropylen einen Meltflow-Index bei 230°C und 2,16 kg von 75 bis 600 g/10 min aufweist.

6.  Verbundwerkstoff gemäß Anspruch 5, dadurch gekennzeichnet, daß das Polypropylen einen Meltflow-Index bei 230°C und 2,16 kg von 100 bis 300 g/10 min aufweist.

7.  Verbundwerkstoff gemäß einem der Ansprüche 1 bis 6, dadurch gekennzeichnet, daß die Fasermatten aus Glasfasern bestehen.

**Patentansprüche für folgenden Vertragsstaat : ES**

1.  Verbundwerkstoff, im wesentlichen aus Polypropylen und einer Verstärkung aus einer oder mehreren Fasermatten bestehend, dadurch gekennzeichnet, daß das Polypropylen eine bimodale Molekulargewichtsverteilung besitzt, wobei die Gewichtsmittelwerte der Molekulargewichte der höhermolekularen Fraktion bei 150.000 bis 900.000 g/mol und jene der niedermolekularen Fraktion bei 50.000 bis 150.000 g/mol liegen, und die Differenz zwischen den Gewichtsmittelwerten der Molekulargewichte der einzelnen Fraktionen mindestens 50.000 g/mol beträgt.

2.  Verbundwerkstoff gemäß Anspruch 1, dadurch gekennzeichnet, daß die Gewichtsmittelwerte der Molekulargewichte der höhermolekularen Fraktion bei 180.000 bis 500.000 g/mol und jene der niedermolekularen Fraktion bei 80.000 bis 120.000 g/mol liegen.

3.  Verbundwerkstoff gemäß Anspruch 1 oder 2, dadurch gekennzeichnet, daß die niedermolekulare Fraktion in Mengen von 10 bis 60 Gew.% bezogen auf Polypropylen, vorliegt.

4.  Verbundwerkstoff gemäß Anspruch 3, dadurch gekennzeichnet, daß die niedermolekulare Fraktion in Mengen von 15 bis 50 Gew.% bezogen auf Polypropylen, vorliegt.

5.  Verbundwerkstoff gemäß einem der Ansprüche 1 bis 4, dadurch gekennzeichnet, daß das Polypropylen einen Meltflow-Index bei 230 °C und 2,16 kg von 75 bis 600 g/10 min aufweist.

6. Verbundwerkstoff gemäß Anspruch 5, dadurch gekennzeichnet, daß das Polypropylen einen Meltflow-Index bei 230 °C und 2.16 kg von 100 bis 300 g/10 min aufweist.

7. Verfahren zur Herstellung eines Verbundwerkstoffes, im wesentlichen aus Polypropylen und einer Verstärkung aus einer oder mehreren Fasermatten bestehend, dadurch gekennzeichnet, daß Polypropylen mit einer bimodalen Molekulargewichtsverteilung, bei der die Gewichtsmittelwerte der Molekulargewichte der höhermolekularen Fraktion bei 150.000 bis 900.000 g/mol und jene der niedermolekularen Fraktion bei 50.000 bis 150.000 g/mol liegen, und die Differenz zwischen den Gewichtsmittelwerten der Molekulargewichte der einzelnen Fraktionen mindestens 50.000 g/mol beträgt, gemeinsam mit üblichen Additivs aufgeschmolzen, mit einer oder mehreren Fasermatten verpreßt und anschließend abgekühlt wird.

8. Verfahren zur Herstellung eines Verbundwerkstoffes gemäß Anspruch 7, dadurch gekennzeichnet, daß die Gewichtsmittelwerte der Molekulargewichte der höhermolekularen Fraktion bei 180.000 bis 500.000 g/mol und jene der niedermolekularen Fraktion bei 80.000 bis 120.000 g/mol liegen.

9. Verfahren zur Herstellung eines Verbundwerkstoffes gemäß Anspruch 7 oder 8, dadurch gekennzeichnet, daß die niedermolekulare Fraktion in Mengen von 15 bis 50 Gew.%, bezogen auf Polypropylen, vorliegt.

10. Verfahren zur Herstellung eines Verbundwerkstoffes gemäß einem der Ansprüche 7 bis 9, dadurch gekennzeichnet, daß das Polypropylen einen Meltflow-Index bei 230 °C und 2,16 kg von 75 bis 600 g/10 min aufweist.

## Claims
### Claims for the following Contracting States : AT, BE, CH, LI, DE, FR, GB, GR, IT, LU, NL, SE

1. Composite material essentially comprising polypropylene and a reinforcement of one or more fibre mats, characterized in that the polypropylene has a bimodal molecular weight distribution, the weight-average values of the molecular weights of the higher molecular weight fraction being 150,000 to 900,000 g/mol and those of the low molecular weight fraction being 50,000 to 150,000 g/mol, and the difference between the weight-average values of the molecular weights of the individual fractions being at least 50,000 g/mol.

2. Composite material according to Claim 1, characterized in that the weight-average values of the molecular weights of the higher molecular weight fraction are 180,000 to 500,000 g/mol and those of the low molecular weight fraction are 80,000 to 120,000 g/mol.

3. Composite material according to Claim 1 or 2, characterized in that the low molecular weight fraction is present in amounts of 10 to 60% by weight, based on polypropylene.

4. Composite material according to Claim 3, characterized in that low molecular weight fraction is present in amounts of 15 to 50% by weight, based on polypropylene.

5. Composite material according to one of Claims 1 to 4, characterized in that the polypropylene has a melt flow index at 230°C and 2.16 kg of 75 to 600 g/10 mins.

6. Composite material according to Claim 5, characterized in that the polypropylene has a melt flow index at 230°C and 2.16 kg of 100 to 300 g/10 mins.

7. Composite material according to one of Claims 1 to 6, characterized in that the fibre mats comprise glass fibres.

### Claims for the following Contracting State : ES

1. Composite material essentially comprising polypropylene and a reinforcement of one or more fibre mats, characterized in that the polypropylene has a bimodal molecular weight distribution, the weight-average values of the molecular weights of the higher molecular weight fraction being 150,000 to 900,000 g/mol and those of the low molecular weight fraction being 50,000 to 150,000 g/mol, and the difference between the weight-average values of the molecular weights of the individual fractions being at least 50,000 g/mol.

2. Composite material according to Claim 1, characterized in that the weight-average values of the molecular weights of the higher molecular weight fraction are 180,000 to 500,000 g/mol and those of the low molecular weight fraction are 80,000 to 120,000 g/mol.

3. Composite material according to Claim 1 or 2, characterized in that the low molecular weight fraction is present in amounts of 10 to 60% by weight, based on polypropylene.

4. Composite material according to Claim 3, characterized in that low molecular weight fraction is present in amounts of 15 to 50% by weight, based on polypropylene.

5. Composite material according to one of Claims 1 to 4, characterized in that the polypropylene has a melt flow index at 230°C and 2.16 kg of 75 to 600 g/10 mins.

6. Composite material according to Claim 5, characterized in that the polypropylene has a melt flow index at 230°C and 2.16 kg of 100 to 300 g/10 mins.

7. Process for the production of a composite material essentially comprising polypropylene and a reinforcing of one or more fibre mats, characterized in that the polypropylene having a bimodal molecular weight distribution, in which the weight-average values of the molecular weights of the higher molecular weight fraction are 150,000 to 900,000 g/mol and those of the low molecular weight fraction are 50,000 to 150,000 g/mol, and the difference between the weight-average values of the molecular weights of the individual fractions is at least 50,000 g/mol, are melted together with customary additives, compression-moulded with one ore more fibre mats, and finally cooled.

8. Process for the production of a composite material according to Claim 7, characterized in that the weight-average values of the molecular weights of the higher molecular weight fraction are 180,000 to 500,000 g/mol and those of the low molecular weight fraction are 80,000 to 120,000 g/mol.

9. Process for the production of a composite material according to Claim 7 or 8, characterized in that the low molecular weight fraction is present in amounts of 15 to 50% by weight, based on polypropylene.

10. Process for the production of a composite material according to one of Claims 7 to 9, characterized in that the polypropylene has a melt flow index at 230°C and 2.16 kg of 75 to 600 g/10 mins.

**Revendications**

**Revendications pour les Etats contractants suivants : AT, BE, CH, LI, DE, FR, GB, GR, IT, LU, NL, SE**

1. Matériau composite essentiellement constitué de polypropylène et d'un renfort formé d'une ou plusieurs nappes de fibres, caractérisé en ce que le polypropylène présente une distribution bimodale du poids moléculaire, les valeurs pondérales moyennes des poids moléculaires de la fraction de poids moléculaire élevé étant de 150 000 à 900 000 g/mole, et celles de la fraction de faible poids moléculaire étant de 50 000 à 150 000 g/mole, et la différence entre les valeurs pondérales moyennes des poids moléculaires des fractions individuelles étant d'au moins 50 000 g/mole.

2. Matériau composite selon la revendication 1, caractérisé en ce que les valeurs pondérales moyennes des poids moléculaires de la fraction de poids moléculaire élevé sont comprises entre 180 000 et 500 000 g/mole, et celles de la fraction de faible poids moléculaire sont comprises entre 80 000 et 120 000 g/mole.

3. Matériau composite selon la revendication 1 ou 2, caractérisé en ce que la fraction de faible poids moléculaire est présente en une quantité de 10 à 60 % en poids par rapport au polypropylène.

4. Matériau composite selon la revendication 3, caractérisé en ce que la fraction de faible poids moléculaire est présente en une quantité de 15 à 50 % en poids par rapport au polypropylène.

5. Matériau composite selon l'une des revendications 1 à 4, caractérisé en ce que le polypropylène a un indice de fusion de 75 à 600 g/10 min à 230°C et 2,16 kg.

6. Matériau composite selon la revendication 5, caractérisé en ce que le polypropylène a un indice de fusion de 100 à 300 g/10 min à 230°C et 2,16 kg.

7. Matériau composite selon l'une des revendications 1 à 6, caractérisé en ce que les nappes de fibres sont formées de fibres de verre.

**Revendications pour l'Etat contractant suivant : ES**

1. Matériau composite essentiellement constitué de polypropylène et d'un renfort formé d'une ou plusieurs nappes de fibres, caractérisé en ce que le polypropylène présente une distribution bimodale du poids moléculaire, les valeurs pondérales moyennes des poids moléculaires de la fraction de poids moléculaire élevé étant de 150 000 à 900 000 g/mole, et celles de la fraction de faible poids moléculaire étant de 50 000 à 150 000 g/mole, et la différence entre les valeurs pondérales moyennes des poids moléculaires des fractions individuelles étant d'au moins 50 000 g/mole.

2. Matériau composite selon la revendication 1, caractérisé en ce que les valeurs pondérales moyennes des poids moléculaires de la fraction de poids moléculaire élevé sont comprises entre 180 000 et 500 000 g/mole, et celles de la fraction de faible poids moléculaire sont comprises entre 80 000 et 120 000 g/mole.

3. Matériau composite selon la revendication 1 ou 2, caractérisé en ce que la fraction de faible poids moléculaire est présente en une quantité de 10 à 60 % en poids par rapport au polypropylène.

4. Matériau composite selon la revendication 3, caractérisé en ce que la fraction de faible poids moléculaire est présente en une quantité de 15 à 50 % en poids par rapport au polypropylène.

5. Matériau composite selon l'une des revendications 1 à 4, caractérisé en ce que le polypropylène a un indice de fusion de 75 à 600 g/10 min à 230°C et 2,16 kg.

6. Matériau composite selon la revendication 5, caractérisé en ce que le polypropylène a un indice de fusion de 100 à 300 g/10 min à 230°C et 2,16 kg.

7. Procédé de fabrication d'un matériau composite essentiellement constitué de polypropylène et d'un renfort formé d'une ou plusieurs nappes de fibres, caractérisé en ce qu'on fait fondre un polypropylène ayant une distribution bimodale du poids moléculaire, les valeurs pondérales moyennes des poids moléculaires de la fraction de poids moléculaire élevé étant de 150 000 à 900 000 g/mole, et celles de la fraction de faible poids moléculaire étant de 50 000 à 150 000 g/mole, et la différence entre les valeurs pondérales moyennes des poids moléculaires des fractions individuelles étant d'au moins 50 000 g/mole, conjointement avec des additifs usuels, on le comprime avec une ou plusieurs nappes de fibres et ensuite, on le refroidit.

8. Procédé de fabrication d'un matériau composite selon la revendication 7, caractérisé en ce que les valeurs pondérales moyennes des poids moléculaires de la fraction de poids moléculaire élevé sont comprises entre 180 000 et 500 000 g/mole, et celles de la fraction de faible poids moléculaire sont comprises entre 80 000 et 120 000 g/mole.

9. Procédé de fabrication d'un matériau composite selon la revendication 7 ou 8, caractérisé en ce que la fraction de faible poids moléculaire est présente en une quantité de 15 à 50 % en poids par rapport au polypropylène.

10. Procédé de fabrication d'un matériau composite selon l'une des revendications 7 à 9, caractérisé en ce que le polypropylène a un indice de fusion de 75 à 600 g/10 min à 230°C et 2,16 kg.